# EUROPEAN PATENT SPECIFICATION

(11) **EP 2 532 228 B1**
(45) Date of publication and mention of the grant of the patent: **15.04.2015**
(21) Application number: 12170745.9
(22) Date of filing: 04.06.2012
(51) Int. Cl.: A01K 1/015

(54) **Floor element for a stall floor provided with a slot grid for drainage**
Spaltbodenelement für einen Stallboden
Élément de caillebotis pour étable

(30) Priority: 06.06.2011 NL 2006896
(43) Date of publication of application: 12.12.2012
(73) Proprietor: Berkel Beton, 7156 JA Beltrum (NL)
(72) Inventor: Lavalaye, Koen Harm Jozef, 7131 XS Lichtenvoorde (NL)
(74) Representative: Verhees, Godefridus Josephus Maria

(56) References cited:
- EP-A1- 0 609 581
- EP-A1- 2 108 254
- EP-A2- 1 112 683
- US-A1- 2004 194 726

## Description

### Field of the invention.

The invention relates to a floor element for a stall floor, which floor element is provided with two abutting sides across from each other against or along which at a small distance, when used in a stall floor, neighbouring floor elements are positioned, and which floor element is provided with a walking surface that has a slot grid for drainage of liquid, which slot grid comprises main slots which extend in essence crosswise to the abutting sides, as well as transverse slots which are shallower than the main slots and which extend from one of the main slots to a neighbouring main slot and are situated at an angle to the main slots, the walking surface being subdivided into sub-faces which are bounded by neighbouring main slots and neighbouring transverse slots.

Cow-houses in Holland are usually built having plate-shaped floor elements over manure cellars. In the place of the abutting sides there are usually openings for drainage of liquid (urine) to the manure cellar.

### State of the art.

A floor element of this type is known from EP 2 108 254 A. In this known floor element transverse slots form a fishbone pattern. A problem with similar floor elements is that the walking surface is slippery as a result of which the cattle can easily slip on it.

### Summary of the invention.

It is an object of the invention to provide a floor element of the type defined in the opening paragraph with which the chance of the cattle slipping on it is slimmer than with the known floor element. For this purpose the floor element according to the invention is **characterized in that** each sub-face is provided with grooves which are shallower than the transverse slots and of which a first groove runs parallel to the main slots and extends from one transverse slot to the next transverse slot, and a second groove runs parallel to the transverse slots and extends from one main slot to the next main slot, which grooves intersect each other. It has turned out that grooves in the walking surface render the surface more non slipping causing the anti-slip properties to increase. By having the grooves run in different directions, good anti-slip properties are obtained in these directions. The grooves preferably intersect each other in the middle.

An advantageous embodiment of the floor element according to the invention is **characterized in that** the main slots are at least twice as deep and twice as wide as the transverse slots.

The floor element is preferably plate-shaped and equally thick throughout, while the walking surface is flat.

### Brief description of the drawings.

The following description relating to the appended drawings, the whole given by way of non-limiting example of the floor element according to the invention, will provide better understanding of how the invention can be realised, in which:
Fig. 1 shows a top view of an embodiment of the floor element according to the invention;
Fig. 2 shows a side view of the floor element shown in Fig. 1;
Fig. 3 shows a detail of a top view of the floor element; and
Figs. 4, 5 and 6 show a cross-sectional view of the floor element in the place of a main slot, a transverse slot and grooves respectively.

### Detailed description of the drawings.

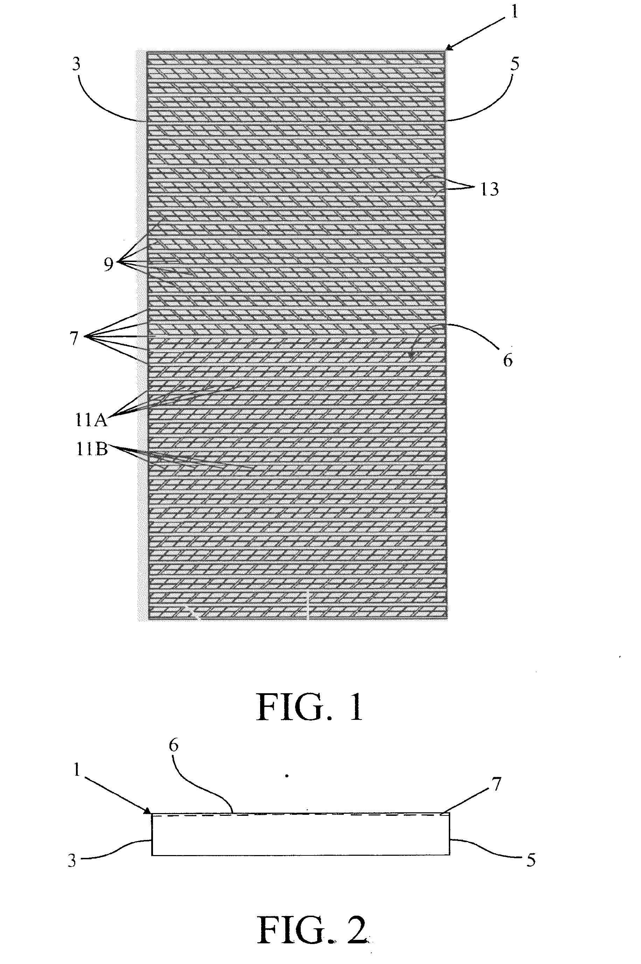

Fig. 1 shows a top view of an embodiment of the floor element according to the invention. The floor element 1 is plate-shaped having an equal thickness throughout and has two abutting sides 3 and 5 opposite each other, against which or along which neighbouring floor elements are positioned at a small distance when used in a stall floor. The floor element 1 has a flat walking surface 6 provided with a slot grid for discharging urine.

The slot grid has main slots 7 extending transversely to the abutting sides 3 and 5. The depth of the main slots 7 continuously and evenly increases from the middle between the abutting sides to the abutting sides 3 and 5 (as shown in Fig. 2). In lieu of being sloping main slots they may also have the same depth over their entire length.

The slot grid further has transverse slots 9 extending from one of the main slots to a neighbouring main slot. The depth of the transverse slots is the same over the entire length of the transverse slots.

In between two neighbouring main slots and two neighbouring transverse slots 13 are situated sub-faces of the walking surface 6. Grooves 11A and 11B are provided in these sub-faces 13. The grooves 11A run parallel to the main slots 7 and the grooves 11B run parallel to the transverse slots 9. The grooves 11A and 11B intersect each other in the middle. Thanks to the presence of the grooves in the walking surface, the cattle have more grip on the walking surface and the grooves reduce the chance of the cattle slipping.

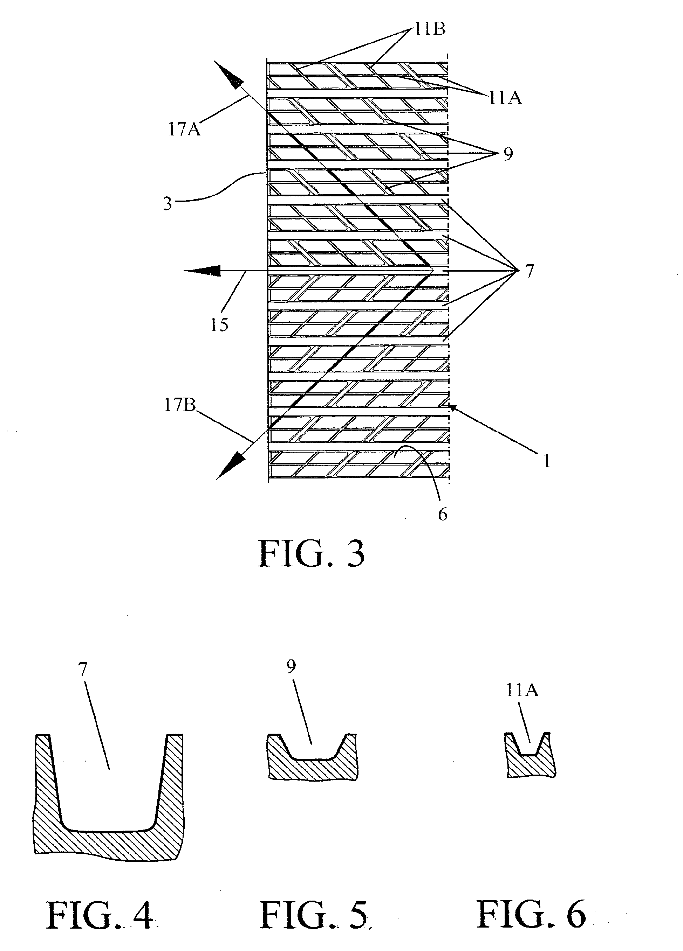

Fig. 3 shows a detail of the top view of the floor element. The main slots 7 extend in a direction 15 at right angles to the abutting sides 3 and 5 and the transverse slots 9 extend in directions 17A and 17B at an angle to the main slots 7, while the transverse slots on one side from the centre of the floor element 1 extend in the direction 17A and those on the other side from the centre extend in the direction 17B.

Figs. 4, 5 and 6 show cross-sectional views of a main slot, a transverse slot and grooves. The main slot has a width of 14 mm and a varying depth of 5 mm in the middle up to 12 mm on the abutting sides. The transverse slot 9 is 9 mm wide and has a depth of 5 mm and the grooves are 4 mm wide and have a depth of 2 mm.

Albeit the invention has been described in the foregoing based on the drawings, it should be observed that the invention is not by any manner or means restricted to the embodiment shown in the drawings.

## Claims

1. A floor element (1) for a stall floor, which floor element is provided with two abutting sides (3, 5) across from each other against or along which at a small distance, when used in a stall floor, neighbouring floor elements are positioned, and which floor element is provided with a walking surface (6) that has a slot grid for drainage of liquid, which slot grid comprises main slots (7) which extend in essence crosswise to the abutting sides, as well as transverse slots (9) which are shallower than the main slots and which extend from one of the main slots to a neighbouring main slot and are running at an angle to the main slots, the walking surface being subdivided into sub-faces (13) which are bounded by neighbouring main slots and neighbouring transverse slots, **characterized in that** each sub-face (13) is provided with grooves (11A, 11B) which are shallower than the transverse slots (9) and of which a first groove (11A) runs parallel to the main slots (7) and extends from one transverse slot to the next transverse slot, and a second groove (11B) runs parallel to the transverse slots (9) and extends from one main slot to the next main slot, which grooves (11A, 11B) intersect each other.

2. A floor element (1) as claimed in claim 1, **characterized in that** the grooves (11A, 11B) intersect each other in the middle.

3. A floor element (1) as claimed in claim 1 or 2, **characterized in that** the main slots (7) are at least twice as deep and twice as wide as the transverse slots (9).

4. A floor element (1) as claimed in claim 1, 2 or 3, **characterized in that** the floor element is plate-shaped and is equally thick throughout while the walking surface (6) is flat.

## Patentansprüche

1. Bodenelement (1) für einen Stallboden, welches mit zwei einander gegenüberliegenden Anlegeseiten (3, 5) versehen ist, an denen oder entlang derer in geringem Abstand, bei Anwendung in einem Stallboden, angrenzende Bodenplatten verlegt sind, und welches mit einer Lauffläche (6) versehen ist, die in einem Muster angeordnete Kanäle für die Ableitung von Flüssigkeiten aufweist, wobei das erwähnte Muster Hauptkanäle (7) umfasst, die hauptsächlich quer zu den Anlegeseiten verlaufen, sowie Querkanäle (9), die weniger tief als die Hauptkanäle sind und jeweils von einem Hauptkanal zu einem benachbarten Hauptkanal verlaufen und schräg zu den Hauptkanälen angeordnet sind, wobei die Lauffläche in Teilflächen (13) gegliedert ist, die durch benachbarte Hauptkanäle und benachbarte Querkanäle begrenzt werden, **dadurch gekennzeichnet, dass** jede Teilfläche (13) mit Rillen (11A, 11B) versehen ist, die weniger tief als die Querkanäle (9) sind und von denen eine erste Rille (11A) parallel zu den Hauptkanälen (7) angeordnet ist und von einem Querkanal zum anderen Querkanal verläuft, während eine zweite Rille (11B) parallel zu den Querkanälen (9) angeordnet und von einem Hauptkanal zum anderen Hauptkanal verläuft, wobei die Rillen (11A, 11B) einander schneiden.

2. Bodenelement (1) nach Anspruch 1, **dadurch gekennzeichnet, dass** sich die Rillen (11A, 11B) in der Mitte schneiden.

3. Bodenelement (1) nach einem der Ansprüche 1 oder 2, **dadurch gekennzeichnet, dass** die Hauptkanäle (7) mindestens zweimal so tief und zweimal so breit sind wie die Querkanäle (9).

4. Bodenelement (1) nach einem der Ansprüche 1, 2 oder 3, **dadurch gekennzeichnet, dass** das Bodenelement plattenförmig ausgebildet und überall gleich dick ist, wobei die Lauffläche (6) eben ist.

## Revendications

1. Elément de sol (1) pour le sol d'une étable, écurie ou porcherie, lequel élément de sol est pourvu de deux côtés adjacents (3, 5) se trouvant l'un en face de l'autre et contre lesquels ou le long desquels sont placés à faible distance, lors de l'utilisation dans un sol d'étable, d'écurie ou de porcherie, des éléments de sol contigus, et lequel élément de sol est pourvu d'une bande de roulement (6) elle-même pourvue d'une répartition de rainures pour l'écoulement des liquides, laquelle répartition de rainures comprend des rainures principales (7), qui s'étendent principalement dans le sens transversal sur les côtés adjacents, ainsi que des rainures transversales (9) qui sont moins profondes que les rainures principales, qui s'étendent depuis l'une des rainures principales jusqu'à une rainure principale contiguë, et qui sont situées en diagonal sur les rainures principales, où la bande de roulement est subdivisée en une partition de sous-surfaces (13) qui sont délimitées par des rainures principales contiguës et des rainures transversales contiguës, **caractérisé en ce que** chaque sous-surface (13) est pourvue de sillons (11A, 11B) moins profonds que les rainures transversales (9) et dont un premier sillon (11A) est parallèle aux rainures principales (7) et s'étend d'une rainure transversale jusqu'à l'autre rainure transversale, et dont un deuxième sillon (11B) est parallèle aux rainures transversales (9) et s'étend d'une rainure principale jusqu'à l'autre rainure principale, lesquels sillons (11A, 11B) se croisent.

2. Elément de sol (1) selon la revendication 1, **caractérisé en ce que** les sillons (11A, 11B) se croisent au milieu.

3. Elément de sol (1) selon la revendication 1 ou 2, **caractérisé en ce que** les rainures principales (7) sont au moins deux fois plus profondes et deux fois plus larges que les rainures transversales (9).

4. Elément de sol (1) selon la revendication 1, 2 ou 3, **caractérisé en ce que** l'élément de sol est en forme de plaque et a partout la même épaisseur, où la bande de roulement (6) est plate.
